# EUROPEAN PATENT APPLICATION

(11) **EP 4 831 936 A1**
(43) Date of publication of application: **28.10.2026**
(21) Application number: 25305584.2
(22) Date of filing: 23.04.2025
(51) Int. Cl.: G06V 10/82

(54) **DETECTING AN ARTIFICIALLY GENERATED IMAGE**

(71) Applicant: Université de Technologie de Troyes, 10000 Troyes (FR); Centre National de la Recherche Scientifique, 75016 Paris (FR); Université de Lille, 59800 Lille (FR); Centrale Lille Institut, 59651 Villeneuve-d'Ascq (FR)
(72) Inventor: COGRANNE, Rémi, CHAMOY (FR); MALLET, Antoine, TROYES (FR); BAS, Patrick, VILLENEUVE D'ASCQ (FR)
(74) Representative: Bandpay & Greuter

(57) **Abstract**

The disclosure notably relates to a computer-implemented method for detecting an artificially generated image. The method comprises obtaining an image and applying one or more noise extractors to the obtained image, thereby obtaining one or more noise maps. The method further comprises, for each obtained noise map, selecting a set of most homogeneous blocks of the noise map. Each block comprises respective adjacent pixels of the noise map. The method further comprises, for each obtained noise map, determining a correlation matrix from the selected set of most homogeneous blocks. The correlation matrix represents a correlation between pairs of pixels of the selected set of most homogeneous blocks. The method further comprises determining whether the obtained image is artificially generated by providing as input the determined correlation matrices to a detector. The method is an improved solution for detecting artificially generated images.

## Description

### TECHNICAL FIELD

The disclosure relates to the field of computer programs and systems, and more specifically to methods, systems, and programs for detecting an artificially generated image.

### BACKGROUND

Artificially generated content, such as Al-generated images, is common online. Such content may be used to spread "fake news" or illicit material. Consequently, it is important to distinguish artificially generated content-especially artificially generated images-from authentic content, such as photographs taken with physical, real-world cameras. Several governmental institutions consider this task essential.

One possible approach to address the problem is to introduce a distinctive mark on Al-generated content. However, many generative models are easy to use and modify. Indeed, some generative models are even available as open-source programs that can be run on personal computers. Thus, ill-intentioned users could potentially remove any mark.

Within this context, there is still a need for an improved method for detecting artificially generated images.

### SUMMARY

It is therefore provided a computer-implemented method for detecting an artificially generated image. The method may be referred to as the "detecting method" in the present disclosure.

The detecting method comprises obtaining an image. The detecting method further comprises applying one or more noise extractors to the obtained image, thereby obtaining one or more noise maps of the obtained image. The detecting method further comprises, for each obtained noise map, selecting a set of most homogeneous blocks of the noise map. Each block comprises respective adjacent pixels of the noise map. The detecting method further comprises, for each obtained noise map, determining a correlation matrix from the selected set of most homogeneous blocks. The correlation matrix represents a correlation between pairs of pixels of the selected set of most homogeneous blocks. The detecting method further comprises determining whether the obtained image is artificially generated by providing as input the determined correlation matrices to a detector.

The detecting method may comprise one or more of the following:
- the set of most homogeneous blocks are selected by minimizing a variance and/or a mean absolute value;
- the selecting of the set of most homogeneous blocks is performed using the formula: ${B}_{s}^{{F}_{k}} = \left\{{b}_{i}^{{F}_{k}}:{b}_{i}^{{F}_{k}}∈{{min}_{i}}^{N}{V}_{u}\left[{b}_{i}^{{F}_{k}}\left[u\right]\right]∩{{min}_{i}}^{N}{E}_{u}\left[\left|{b}_{i}^{{F}_{k}}\left[u\right]\right|\right]\right\}$ wherein:
   - ${B}_{s}^{{F}_{k}}$ is the selected set of most homogeneous blocks;
   - 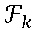 is the noise extractor used for obtaining the noise map;
   - *i* ranges over a set of blocks of the noise map;
   - ${b}_{i}^{{F}_{k}}$ is an *i*-th block of the noise map;
   - u ranges over all pixels of a block;
   - ${b}_{i}^{{F}_{k}} \left[u\right]$ is a value of a pixel *u* of the block ${b}_{i}^{{F}_{k}}$;
   - ${V}_{u} \left[{b}_{i}^{{F}_{k}}\left[u\right]\right]$ is a variance of the values of the pixels of the block ${b}_{i}^{{F}_{k}}$ with respect to the variable *u*;
   - ${E}_{u} \left[\left|{b}_{i}^{{F}_{k}}\left[u\right]\right|\right]$ is an expected absolute value of the values of the pixels of the block ${b}_{i}^{{F}_{k}}$ with respect to the variable u;
   - *N is* a predetermined maximum number of blocks;
   - ${{min}_{i}}^{N} {V}_{u} \left[{b}_{i}^{{F}_{k}}\left[u\right]\right]$ is a set of *N* blocks ${b}_{i}^{{F}_{k}}$ whose variance ${V}_{u} \left[{b}_{i}^{{F}_{k}}\left[u\right]\right]$ is the lowest among all blocks; and
   - ${{min}_{i}}^{N} {E}_{u} \left[\left|{b}_{i}^{{F}_{k}}\left[u\right]\right|\right]$ is a set of *N* blocks ${b}_{i}^{{F}_{k}}$ whose expected absolute value ${E}_{u} \left[\left|{b}_{i}^{{F}_{k}}\left[u\right]\right|\right]$ is the lowest among all blocks;
- the determining of the correlation matrix is performed using the formula: ${Σ}^{{F}_{k}} = {\left({σ}_{u , v}^{{F}_{k}}\right)}_{u , v} = \frac{{Cov}_{i} \left({b}_{i}^{{F}_{k}}\left[u\right],{b}_{i}^{{F}_{k}}\left[v\right]\right)}{\sqrt{{V}_{i} \left[{b}_{i}^{{F}_{k}}\left[u\right]\right] {V}_{i} \left[{b}_{i}^{{F}_{k}}\left[v\right]\right]}}$ wherein:
   - ${Σ}^{{F}_{k}} = {\left({σ}_{u , v}^{{F}_{k}}\right)}_{u , v}$ is the correlation matrix;
   - 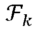 is the noise extractor used for obtaining the noise map;
   - *i* ranges over all blocks of the set of most homogeneous blocks of the noise map;
   - ${b}_{i}^{{F}_{k}}$ is an *i*-th block of the set of most homogeneous blocks of the noise map;
   - u ranges over all pixels of a block;
   - ${b}_{i}^{{F}_{k}} \left[u\right]$ is a value of a pixel *u* of the block ${b}_{i}^{{F}_{k}}$;
   - ${V}_{i} \left[{b}_{i}^{{F}_{k}}\left[u\right]\right]$ is a variance of the vector ${\left({b}_{i}^{{F}_{k}}\left[u\right]\right)}_{i}$ composed by the values of the pixel u in each of the blocks of the set of most homogeneous blocks; and
   - $Cov \left({b}_{i}^{{F}_{k}}\left[u\right],{b}_{i}^{{F}_{k}}\left[v\right]\right)$ is a covariance between the vector ${\left({b}_{i}^{{F}_{k}}\left[u\right]\right)}_{i}$ composed by the values of the pixel *u* in each of the blocks of the set of most homogeneous blocks and the vector ${\left({b}_{i}^{{F}_{k}}\left[v\right]\right)}_{i}$ composed by the values of the pixel *v* in each of the blocks of the set of most homogeneous blocks;
- the one or more noise extractors comprise a Noiseprint extractor and/or one or more Laplacian filters, the one or more Laplacian filters being optionally each for a respective color channel of the obtained image;
- the detector is a pre-trained machine-learning model configured for outputting whether the image is artificially generated based on the determined correlation matrices;
- the detector comprises at least one binary classifier configured for taking as input the determined correlation matrices;
- the detector comprises a multi-class classifier, each class of the classifier corresponding to a respective image generator of a predetermined list of image generators;
- the detector is configured for applying the formula: $δ \left(x\right) : X \to \left\{{H}_{0}, {H}_{1}\right\} ; δ \left(x\right) = \left\{\begin{matrix}{H}_{0} if h \left(f\left(x\right),g\left(x\right)\right) \leq τ , \\ {H}_{1} otherwise ,\end{matrix}\right.$ wherein:
   - 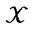 is a set of which elements *x* ∈ 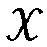 each consisting of one or more correlation matrices and each corresponding to an image;
   - $f : X \to {\left[0, 1\right]}^{M}$, with *f*(*x*) *=* (*f₁*(*x*), *...,f_{M}*(*x*)), is a multi-class classifier, where *fᵢ*(*x*) indicates a probability that the image corresponding to *x* is generated by a *i*-th image generator of the predetermined list of image generators, and *M* is the number of image generators of the predetermined list;
   - $g = {\left\{{g}_{i}:X\to \left[0, 1\right]\right\}}_{i = 1}^{M}$ is a set of binary classifiers, each binary classifier *gᵢ*(*x*) indicating a probability that the image corresponding to *x* is generated by the *i*-th image generator of the predetermined list of image generators;
   - *h:* [0,1]*^{2M}* → [0,1] is a binary classifier;
   - *τ* ∈ [0,1] is a predetermined threshold;
   - 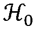 is the property that the image corresponding to *x* is not artificially generated; and
   - 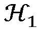 is the property that the image corresponding to *x* is artificially generated; and/or
- the detector is further configured for outputting, for each given image generator of the predetermined list of image generators, a probability that the obtained image is generated by the given image generator.

It is further provided a computer-implemented method for machine-learning a model usable as a detector in the detecting method. The method may be referred to as the "machine-learning method" in the present disclosure.

The machine-learning method comprises obtaining a model. The machine-learning method further comprises obtaining a dataset of training images comprising artificially generated images and real-world camera images. The machine-learning method further comprises obtaining a training dataset from the obtained dataset of training images. The machine-learning method further comprises training the model based on the obtained training dataset.

The obtaining of the training dataset in the machine-learning method may comprise, for each training image:
- applying one or more noise extractors to the training image, thereby obtaining one or more noise maps of the training image;
- for each obtained noise map:
   - selecting a set of most homogeneous blocks of the noise map, each block comprising respective adjacent pixels of the noise map;
   - determining a correlation matrix from the selected set of most homogeneous blocks, the correlation matrix representing a correlation between pairs of pixels of the selected set of most homogeneous blocks.

It is further provided a computer program comprising instructions for performing the detecting method and/or the machine-learning method.

It is further provided a device comprising a data storage medium having recorded thereon the computer program.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (e.g., the device is a subsystem of the overall system). The system may further comprise a graphical user interface coupled to the processor.

### BRIEF DESCRIPTION OF THE DRAWINGS

Non-limiting examples will now be described in reference to the accompanying drawings, where:
- FIG. 1 shows a flowchart of an example of the detecting method;
- FIGs. 2 illustrates an example of a process of obtaining an image with a real-world camera;
- FIG. 3 illustrates an example of determining a correlation matrix, for the purpose of explanation, at different step of an image obtained with a real-world camera;
- FIG. 4 illustrates an example of an architecture of an artificial image generator;
- FIGs. 5-7 illustrate examples of implementations of the detecting method;
- FIGs. 8-9 illustrate examples of correlation matrices obtained, respectively, from images capture with real-world camera and generated with artificial image generator;
- FIGs. 10-11 illustrate results of implementations of the detecting method; and
- FIG. 12 shows an example of the implementation of the system.

### DETAILED DESCRIPTION

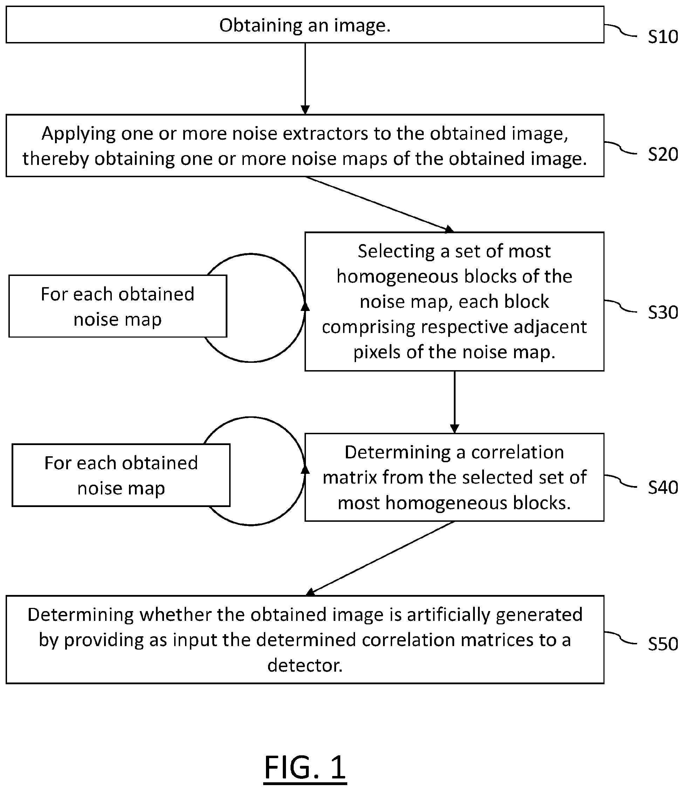

With reference to the flowchart of FIG. 1, it is proposed a computer-implemented method for detecting an artificially generated image. The method may be referred to as the "detecting method" in the present disclosure.

The detecting method comprises obtaining S10 an image. The detecting method further comprises applying S20 one or more noise extractors to the obtained image, thereby obtaining one or more noise maps of the obtained image (i.e., a noise map for each noise extractor). The detecting method further comprises, for each obtained noise map, selecting S30 a set of most homogeneous blocks of the noise map. Each block comprises respective adjacent pixels of the noise map (e.g., a block may be a square of pixels). The detecting method further comprises, for each obtained noise map, determining S40 a correlation matrix from the selected set of most homogeneous blocks. The correlation matrix represents a correlation between pairs of pixels of the selected set of most homogeneous blocks (e.g., in the correlation, the pixels being fixed and the blocks varying). The detecting method further comprises determining S50 whether the obtained image is artificially generated by providing as input the determined correlation matrices to a detector.

The detecting method enables the detection of artificially generated images, and significantly outperforms previous approaches. In particular, the detecting method leverages the differences between the inner processing required for the generation of an image with a real camera and with an artificial image generator to detect whether an image is artificially generated. Specifically, in the detecting method, these differences are detected through an analysis of the statistical differences on the noise comprised in all images. The noise, is obtained from the most homogeneous blocks, wherein it is most visible. The statistical differences are examined through a comparison (with a detector) of the correlation matrices obtained from the noise of the most homogeneous blocks. By following this process, the detecting method reliably detects artificially generated (e.g., synthetic, Al-generated) images. Notably, the detecting method maintains high accuracy even when the images are compressed, such as in JPEG format, ensuring robust operation under a wide range of practical conditions. Moreover, the detecting method can accurately detect artificially generated images produced by generative models not included in the training and/or testing phases of the detecting method, thereby confirming its adaptability to new generative model architectures.

Implementations of the detecting method are discussed further below in the present disclosure. The implementations comprise extensive tests and evaluations demonstrating the performances of the detecting method. The results of the implementations comprise comparative studies, showing the efficacy of the detecting method compared to prior art methods. The implementations were tested both on uncompressed and compressed images, showing the efficacy of the detecting method for both use-cases. Moreover, the implementations were tested on images generated by generative models not used during the training and/or testing phase, and the results of the tests show the adaptability of the detecting method to new generative models.

In contrast to other approaches, the detecting method does not require complex deep-learning algorithms. Deep-learning-based methods often struggle with robustness and may fail to generalize to images produced by generators that were not part of the training process. Additionally, their outputs can be difficult to interpret, as they are derived from operations within hidden layers that remain opaque to the user.

The detecting method is based on an approach that leverage methods of signal processing coupled with statistical methods, such as machine-learning methods (e.g., the machine-learning method described herein below). Said statistical methods may consists of few layers and have simple interpretation. For example, the detecting method was implemented and evaluated with two different detectors, a "(1-step)-detector" and a "(3-step)-detector". The detectors consist of (e.g., are composed of) functions whose weights are understandable (e.g., the functions may be log-linear). Therefore, the results of the detecting method are easier to interpret (e.g., compared to the deep-learning-based methods). Moreover, the detecting method has high accuracy and shows great robustness.

The detecting method comprises selecting S30 a set of most homogeneous blocks for each of the obtained noise maps. The selecting S30 enables the reduction the number of required computations for the determining S40 of a correlation matrix. Moreover, the selecting S30 enables the computation of the correlation matrix on the blocks wherein the noise is most detectable (that is, wherein the noise that does not comprise other artifacts).

Indeed, the task of computing a correlation between each couple of pixels of an image may be too expensive computationally. Even for an image of size 512×512 (that is, 2^9×2^9), the covariance matrix would have 2^18×2^18 coefficients (i.e., about 6.9×10^10 coefficients). As stated above, this problem is solved by selecting (at S30) a set of blocks of each of the noise maps.

Moreover, determining a noise map of an image may be a non-trivial task and may be approached in several different ways. For example, the variance of the noise in the noise map may depend on the average brightness of the corresponding region of the image. In addition, some of the methods for extracting a noise map from an image may also extract other properties of the image. For example, a Laplacian filter may extract both the noise of an image, and the contour of object comprised in the image. Thus, obtaining a noise map only containing noise without any other artifact of the image may be difficult. As stated above, this problem is solved by selecting (at S30) a set of blocks of each of the noise maps.

The detecting method is based on a statistical difference between the correlation of the noise between pixels in images obtained with real-world cameras and artificially generated image. These differences between the correlations of noise may be due to the different steps necessary to create an image with real-world cameras and artificially generated images.

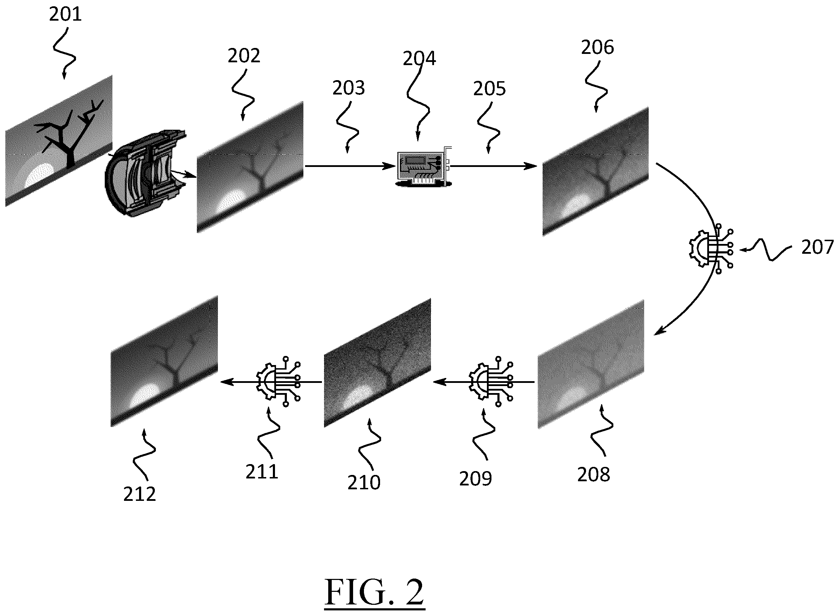

FIG. 2 schematically shows an example of the internal process of a digital camera, from the acquisition of a signal (through lenses) to the output of the final image to the user. A scene 201 is captured by lenses and an optic image 202 is obtained. The sensor samples 203 the continuous optical image 202 at discrete points (the pixels). The ADC 204 converts the analog signals into digital signals. Then, the continuous range of light intensity values is approximated 205 into a set of discrete digital values (e.g., values of each pixel). A RAW image 206 is thereby obtain, comprising unprocessed data directly from the sensor, without any corrections or modifications. A demosaicing 207 step is then effectuated on the RAW image 206, the demosaicing 207 being an interpolation process that reconstructs a full-color image by estimating the missing color information for each pixel. After demosaicing 207, a full-color image 208 is obtained. This full-color image 208 may require further adjustments. Gamma correction and white balance 209 adjust the brightness, contrast, and color temperature of the image. The image obtained 210 may still be processed with visual enhancement processing 211 (such as noise reduction, sharpening, or contrast enhancement) to further improve the visual quality. The final, uncompressed, image 212 is thereby obtained.

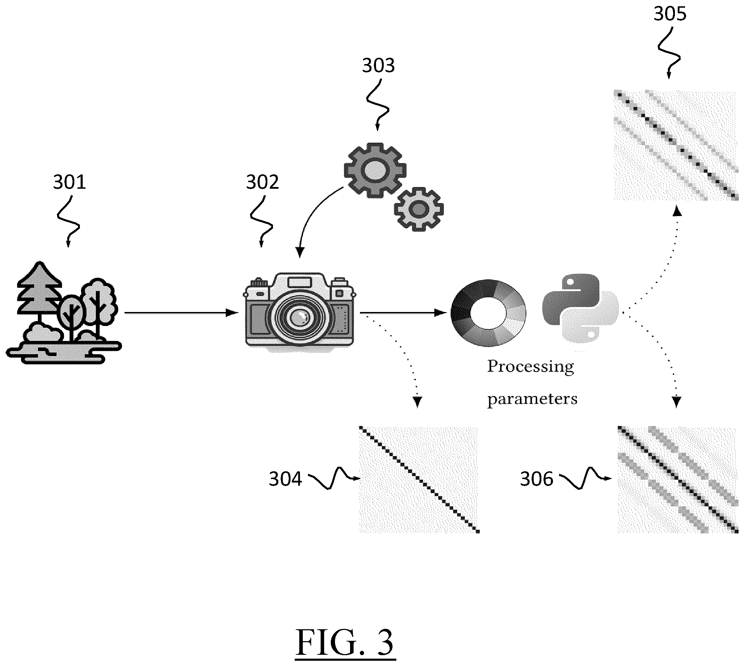

FIG. 3 schematically shows how the initially uncorrelated noise obtained during capture of a digital image with a camera, from the RAW version, becomes partially correlated in the outputted image, due the various processing operation aforementioned (e.g., demosaicing, denoising, sharpening). A scene, or content, 301 is captured by a camera 302 having some predetermined acquisition parameters 303. The noise of the signal obtained from the RAW image by the camera 302 is completely uncorrelated 304, that is, the signal has a noise consisting of a centered gaussian noise for each pixel, the gaussian noise of each pixel uncorrelated with respect to the gaussian noise of any other pixel. The gaussian noise may come from different (e.g., random) manufacturing defects or other real-world factors. The signal, as previously explained with respect to FIG. 2, is processed and different algorithms may be applied. Each of the algorithms modifies the image, creating correlations (e.g., at 305 and 306) between the noise of each of the pixels.

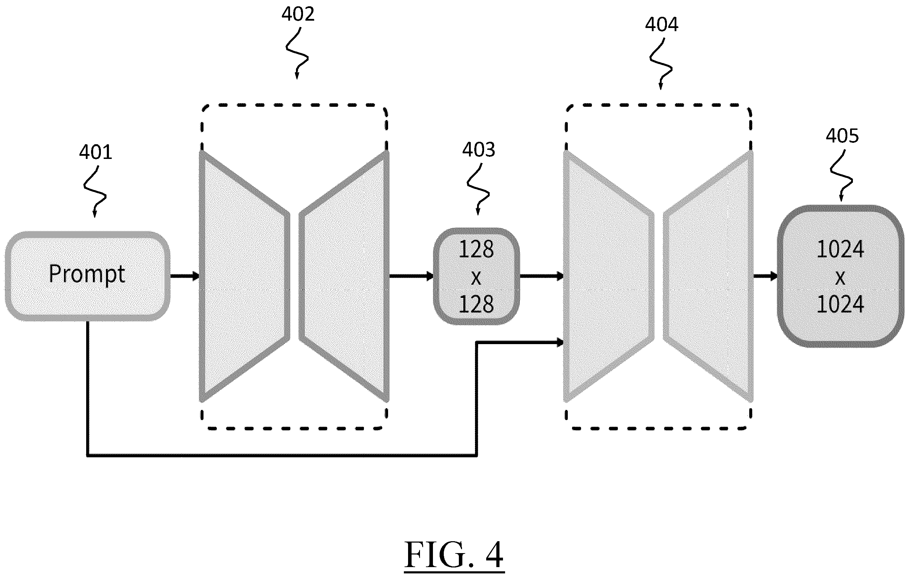

FIG. 4 schematically shows an example of the internal process of an artificial image generator (e.g., an Al-image generator). An artificial image generator generally requires a prompt 401, that may be a textual input provided by the user containing a description or instructions that guide the image generation process. The prompt is used by a base 402 (e.g., a base model) that is responsible for creating an initial representation of the image. The initial representation is then compressed into a latent space 403 where features and patterns are encoded in a more compact form. A refiner 404 takes the latent representation of the base output and improves it, adding finer details, enhancing textures, and correcting any imperfections. The polished image 405 is outputted to the user.

The detecting method fully leverages the differences between the inner processing necessary for the generation of an image with a real camera (as explained in an example with respect to FIGs. 2 and 3) and the inner processing necessary for the generation of images with an artificial image generator (as explained in an example with respect to FIG. 4). These differences cause differences in the correlation between the noise between pixels. Therefore, the detecting method may exploit the difference between the internal algorithms and mechanisms for generating and/or enhancing images to detect which image is artificially generated.

The detecting method enables the detection of whether an image is artificially generated. By this, it is meant that the detecting method enables the detection of whether an image has been entirely generated by an artificial image generator. The *"artificial image generator"* (e.g., Al-image generator) may be a computer system or algorithm designed to create images, starting from a prompt, by defining a value of each of their pixels. The prompt may comprise text and/or images. By the mention "entirely generated" it is meant that each pixel of the image has been generated by the artificial image generator, e.g., no significant portion (e.g., less than 10%) of the generated image exactly (that is, pixel-by-pixel) corresponds to an image obtained with a real-world camera (e.g., that may have been provided as input-e.g., as part of the prompt-to the artificial image generator). The artificial image generator may have been trained on a dataset of images and may be able to generate images strongly resembling realistic photography. The images generated by such an artificial image generator may be hard to detect for a user (e.g., a user may take a very long time before detecting that an image is artificially generated or may not be able to detect at all). Thus, the detecting method is a rapid and efficient way to detect artificially generated images.

On the other hand, an image obtained with a real-world camera may be any photography or picture obtained with a physical instrument (e.g., a real-world camera or a smartphone). Obtaining with a physical instrument may comprise a number of digital steps to post-process the data obtained by the sensors, as explained in reference to FIG. 2.

Any image, whether obtained with a real-world camera or artificially generated, may be determined by a spatial grid of pixels, each pixel comprising one or more values indicating a color and/or a brightness of the pixel.

Referring again to the flowchart of FIG.1, the detecting method is now discussed in further details. The detecting method comprises obtaining an image S10. The image may be directly provided by a user using the detecting method. For example, the detecting method may be implemented in a computer system (e.g., directly accessible by the user, or remotely accessible by the user). The detecting method may comprise a GUI usable by a user to input an image. Additionally or alternatively, the obtaining S10 may comprise retrieving (e.g., from local or remote memory, e.g., from a non-volatile memory) or receiving (e.g., from a remote system, e.g., over a network) the image.

The detecting method may comprise, after S20-S50, outputting whether the image obtained at S10 is artificially generated. The output may be displayed on a GUI (e.g., the same GUI used for inputting the image at S10).

Additionally, the detecting method may comprise at S10 obtaining additional images (a plurality of images at the same time), e.g., by a user, e.g., through a GUI, and performing the steps S20-S50 for each of the images independently (e.g., in parallel). The detecting method may comprise outputting all the results to the user at the same time (e.g., as a list). Thus, the detecting method may comprise obtaining a plurality of images and outputting, for each image of the plurality of images, whether the image is artificially generated.

Alternatively, the detecting method may be automatized in a computer system. For example, the detecting method may comprise running in background of a computer system and automatically obtaining (corresponding to S10) any image-e.g., that may be downloaded or displayed by the system-directly from the system. The detecting method may comprise displaying an alert to the user if the detected image is artificially generated. For example, the detecting method may be implemented as a plugin in a browser. The detecting method may thus be completely automatized and reduce the dangers of generated content-such as "fake news"-shown to a user.

The obtained image (at S10) may comprise a spatial grid composed of pixels, each comprising values corresponding to one or more color channels or other image parameters. For example, the detecting method may comprise obtaining one or more luminance channels (i.e., a brightness channel, or a Y channel) from the image obtained at S10. The luminance channel (or Y channel) may correspond to a grayscale version of the image. Additionally or alternatively, the detecting method may comprise obtaining one or more chrominance channels (e.g., a color channel-such as a Cb channel, or a Cr channel) of the image obtained at S10. The chrominance channels may comprise color information of an image but without the luminance (the brightness). For example, the Cb channel is a "blue-difference chrominance component channel" representing the differential between the blue signal and the luminance (e.g., a Y channel) component for encoding color information. Similarly, the Cr channel is a "red-difference chrominance component channel" representing the differential between the red signal and the luminance (e.g., a Y channel) component for encoding color information.

As is known in the art, each luminance and/or chrominance channel of the obtained image may comprise a spatial grid composed of pixels corresponding to the spatial grid of the obtained image. Each of the pixels of a luminance or chrominance channel of the image obtained as S10 may be assigned to a single value (in contrast to the pixels of the image obtained at S10 that may be assigned to, e.g., three values corresponding to different colors, such as red, green, and blue). This single value may be the respective channel of the respective pixel of the obtained image. For example the Cr channel may comprise the spatial grid of pixels of the obtained image wherein each pixel is only assigned the value corresponding to the color red.

The detecting method comprises applying S20 one or more noise extractors to the obtained image, thereby obtaining one or more noise maps of the obtained image. Each of the one or more noise maps is obtained from a respective noise extractor (applied to either directly to the image or to a respective luminance and/or chrominance channel of the image), so that the obtained one or more noise maps and the applied one or more noise extractors may be in one-to-one correspondence. Thus, when the detecting method applies a single noise extractor, only the noise map obtained using this single noise extractor is processed during steps S30 and S40 (thereby obtaining a single correlation matrix). When the detecting method applies several noise extractors, steps S30 and S40 may be repeated for each noise map (thereby determining a respective correlation matrix for each noise extractor).

Each of the one or more noise extractors may be configured to be applied to a given image so as to identify noise and disturbances (e.g., random variations of brightness and/or color) from the given image. At least one (e.g., each) of the one or more noise extractors may comprise statistical filters.

The applying S20 may comprise applying at least one (e.g., each) of the one or more noise extractors directly to the image obtained at S10. Additionally or alternatively, the applying S20 may comprise applying at least one (e.g., each) of the one or more noise extractors to a respective luminance or chrominance channel of the image. In examples, two or more of the one or more noise extractors (to be applied at S20) may be a same noise extractor applied at different respective luminance or chrominance channels. In examples, the one or more noise maps of the obtained images may be all different. For example, the one or more noise maps may each be obtained either from a respective noise extractor not used for the other noise maps, or from a noise extractor applied to a luminance or chrominance channel, the channel being different from the one used for the other noise maps obtained from the same noise extractor. Thus, the applying S20 of the one or more noise extractors may comprise applying only once a given extractor on a given channel.

The one or more noise extractors (to be applied at S20) may for example comprise a Noiseprint extractor. For example, the applying S20 may comprise applying the Noiseprint extractor to a luminance channel of the image obtained at S20. The Noiseprint extractor, which may be applied at S20, is a well-known noise extractor in the art. The Noiseprint extractor is a noise extractor (e.g., a noise pattern extractor) that may act as fingerprint of the camera sensor and processing pipeline. The Noiseprint extractor may be based on deep learning techniques, such as Siamese convolutional networks.

The one or more noise extractors (to be applied at S20) may for example comprise one or more Laplacian filters, the one or more Laplacian filters being optionally each for a respective color channel (e.g., luminance or chrominance channel) of the obtained image at S10. Each of the Laplacian filters may be given by the convolution with the matrix: $L = \left(\begin{matrix}0 & - 1 & 0 \\ - 1 & 4 & - 1 \\ 0 & - 1 & 0\end{matrix}\right) .$

Thus, the applying S20 may comprise applying one or more Laplacian filters each to a respective luminance or chrominance channel. The applying of a Laplacian filter to a luminance or chrominance channel comprises convoluting the matrix L with the matrix formed by the values of the pixels of the luminance or chrominance channel of the image obtained at S10. Therefore, the applying S20 may comprise averaging the value of the nearby pixels to each pixel of a channel (e.g., luminance and/or chrominance channel) of the image obtained at S10. The averaging may comprise multiplying by a fixed scalar.

For example, the detecting method may comprise applying S20 one or more noise extractors, each of the noise extractors being a Laplacian filter, each being applied to a respective (different) luminance or chrominance channel. For example, the detecting method may comprise applying S20 three noise extractors, each of the noise extractors being a Laplacian filter being applied to a respective color channel of the YCbCr luminance/chrominance space, that is either the luminance Y channel, the chrominance Cb channel, or the Cr channel. In such an example, the detecting method would comprise obtaining three noise maps, one as the result of application of the Laplacian filter (e.g., convolution with the matrix L) to the Y channel, one as the result of application of the Laplacian filter (e.g., convolution with the matrix L) to the Cb channel, and one as the result of application of the Laplacian filter (e.g., convolution with the matrix L) to the Cr channel.

Each of the one or more obtained (at S20) noise maps of the obtained image (at S10) may consist of a matrix of pixel. The matrix of pixels may be of the same dimension as the obtained image. That is, the number of pixels of each of the one or more obtained noise maps may be the same as the number of pixels of the obtained image. The pixels of the noise maps may be associated to a single value. Each of the one or more obtained noise maps may represent the distribution of noise across the obtained image.

The detecting method comprises, for each obtained noise map (of the one or more noise maps obtained at S20), selecting S30 a set of most homogeneous blocks of the noise map, each block comprising respective adjacent pixels of the noise map. That is, the selecting S30 is performed on each of the one or more noise maps obtained at S20 independently, e.g., in parallel. Thus, the selecting S30 is performed one or more times (once for each of the one or more noise maps or one or more noise extractors). Hence, the detecting method comprises selecting one or more sets of most homogeneous blocks, one for each respective one of the one or more noise maps (e.g., one for each respective noise extractors applied at S20). Hence, the one or more sets of most homogeneous blocks and the one or more noise maps may be in 1-to-1 correspondence.

At least one (e.g., each) block may correspond to a *"square"* of pixels, comprising one or more adjacent pixels of the respective noise map. At least one (e.g., each) block may comprise (e.g., consist of) all the pixels having coordinates (*x, y*) wherein *x*₀ ≤ *x* ≤ *x*₁ and *y*₀ ≤ *y* ≤ *y*₁ for fixed *x*₀*,x*₁*,y*₀*,* and *y*₁. For at least one (e.g., for each) block, the differences *x*₁ - *x*₀ and *y*₁ - *y*₀ may be constant (e.g., equal to a predetermined number). For example, each block may be of size 8 × 8 (e.g., for each block the differences *x*₁ - *x*₀ and *y*₁ - *y*₀ may be always equal to 8). Such a size (8 × 8) may be adapted to the compression in JPEG. The blocks comprised in the set of most homogenous blocks may not overlap with each other, to maximize the amount of information.

The set of most homogeneous blocks of the noise map selected at S30 may consist of one or more blocks of the noise map each having a lowest variation between the values of the pixels of the blocks. For example, the set of most homogeneous blocks may be selected by minimizing a variance and/or a mean absolute value. That is, the set of most homogeneous blocks of the noise map selected at S30 may consist of one or more blocks of the noise map each having a lowest variance and/or mean absolute value. For example, selecting S30 may comprise determining a partition of the noise map into blocks (e.g., a partition of the noise map in blocks of size 8 × 8). The selecting S30, may further comprise computing the variance and/or the mean absolute value of each of the blocks of the partition of the noise map. The selecting may further comprise selecting the blocks with the lowest variance and/or mean absolute value. The selecting of the set of most homogeneous blocks may be performed using the formula: ${B}_{s}^{{F}_{k}} = \left\{{b}_{i}^{{F}_{k}}:{b}_{i}^{{F}_{k}}∈{{min}_{i}}^{N}{V}_{u}\left[{b}_{i}^{{F}_{k}}\left[u\right]\right]∩{{min}_{i}}^{N}{E}_{u}\left[\left|{b}_{i}^{{F}_{k}}\left[u\right]\right|\right]\right\}$ wherein:
- ${B}_{s}^{{F}_{k}}$ is the selected set of most homogeneous blocks,
- 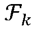 is the noise extractor used for obtaining the noise map (e.g., a Noiseprint to be applied to a luminescence channel, or a Laplace filter to be applied to a luminescence or a chrominance channel),
- *i* ranges over a set of blocks of the noise map obtained with the noise extractor 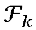 (e.g., all the blocks-e.g., of size 8 × 8-of a partition of the noise map obtained with the noise extractor 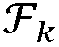 ),
- ${b}_{i}^{{F}_{k}}$ is an *i*-th block of the noise map obtained with the noise extractor 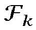 (e.g., *i*-th following a predetermined order, such as the lexicographic order),
- *u* ranges over all pixels of a block (e.g., each *u* may be identified by two coordinates, *u =* (*x,y*), corresponding to the coordinates of the block-e.g., the coordinates varying between 1 and 8),
- ${b}_{i}^{{F}_{k}} \left[u\right]$ is a value of a pixel *u* of the block ${b}_{i}^{{F}_{k}}$,
- ${V}_{u} \left[{b}_{i}^{{F}_{k}}\left[u\right]\right]$ is a variance of the values of the pixels of the block ${b}_{i}^{{F}_{k}}$ with respect to the variable *u,*
- ${E}_{u} \left[\left|{b}_{i}^{{F}_{k}}\left[u\right]\right|\right]$ is an expected absolute value of the values of the pixels of the block ${b}_{i}^{{F}_{k}}$ with respect to the variable u,
- *N* is a predetermined maximum number of blocks, for example *N =* 1500,
- ${{min}_{i}}^{N} {V}_{u} \left[{b}_{i}^{{F}_{k}}\left[u\right]\right]$ is a set of *N* blocks ${b}_{i}^{{F}_{k}}$ whose variance ${V}_{u} \left[{b}_{i}^{{F}_{k}}\left[u\right]\right]$ is the lowest among all blocks (e.g., of the partition of the noise map), and
- ${{min}^{N}}_{i} {E}_{u} \left[\left|{b}_{i}^{{F}_{k}}\left[u\right]\right|\right]$ is a set of *N* blocks ${b}_{i}^{{F}_{k}}$ whose expected absolute value ${E}_{u} \left[\left|{b}_{i}^{{F}_{k}}\left[u\right]\right|\right]$ is the lowest among all blocks (e.g., of the partition of the noise map).

The above-considered values ${V}_{u} \left[{b}_{i}^{{F}_{k}}\left[u\right]\right]$ and ${E}_{u} \left[\left|{b}_{i}^{{F}_{k}}\left[u\right]\right|\right]$ are correlated, so that the set ${{min}^{N}}_{i} {V}_{u} \left[\left|{b}_{i}^{{F}_{k}}\left[u\right]\right|\right] ∩ {{min}^{N}}_{i} {E}_{u} \left[\left|{b}_{i}^{{F}_{k}}\left[u\right]\right|\right]$ is always sufficiently large (e.g., usually having size larger than *N*/2). This is automatic whenever the image obtained as input is, or resembles to, an image obtained with a real-world camera.

The detecting method comprises, for each obtained noise map (of the one or more noise maps obtained at S20), determining S40 a correlation matrix from the selected set of most homogeneous blocks (selected at S30). The correlation matrix represents a correlation between pairs of pixels of the selected set of most homogeneous blocks. That is, the determining S40 is performed on each of the sets of most homogenous blocks selected at S30 independently, e.g., in parallel. Thus, the detecting method comprises determining one or more correlation matrices, one for each respective noise map of the one or more noise maps (obtained at S20). Hence, the sets of correlation matrices, the sets of most homogeneous blocks, and the noise maps may be in 1-to-1 correspondence.

For each obtained noise map, each of the entries of the correlation matrix determined at S40 corresponds to a correlation between two pixels of the selected set of most homogeneous blocks. That is, the correlation is between the values that a first pixel has over the different blocks of the set of most homogeneous blocks and the values that a second pixel has over the different blocks of the set of most homogeneous blocks. Equivalently, the correlation is between a first vector having as entries the values that a first pixel has over the different blocks of the set of most homogeneous blocks and a second vector having as entries the values that a second pixel has over the different blocks of the set of most homogeneous blocks. Thus, the determining S40 may comprise an identification of the pixels of the different blocks. That is, the determining S40 may comprise determining an identification (e.g., given by coordinates, the coordinates being relative to the respective block itself) of each pixel of each block in the set of most homogenous blocks. The determining of an identification may assign to each block a same set of identification. Thus, the set of pixels of each block in the set of most homogeneous blocks may be in 1-to-1 correspondence (e.g., via the above identification) to the set of pixels of any other block in the set of most homogenous blocks.

In examples, the determining S40 may then comprise, for each given identification, defining a vector (associated to the identification) having as entries the values of the pixel associated to the identification in each of the blocks of the set of most homogeneous blocks. Such a vector may, thus, have a dimension equal to the cardinality *n* of the set of most homogeneous blocks. The determining S40 may further comprise computing the correlation between all the couples of the defined vectors.

In examples, each of the blocks in the set of most homogeneous blocks selected at S30 may be a square (e.g., a 8 × 8 square). The determining S40 may comprise associating to each pixel of each block a coordinate (*x*,*y*) corresponding to the position of the pixel within the square (e.g., where in 1 ≤ *x* ≤ 8 and 1 ≤ *y* ≤ 8). The determining S40 may comprise, for each couple of coordinates (*x*₁,*y*₁) and (*x*₂*,y*₂), computing the correlation between (e.g., the vector composed of) the values of the pixels of coordinates (*x*₁,*y*₁) and (e.g., the vector composed of) the values of the pixels of coordinates (*x₂,y*₂) of the blocks of the set of most homogeneous blocks.

The determining S40 of the correlation matrix may be performed using the formula: $\begin{matrix}{Σ}^{{F}_{k}} = {\left({σ}_{u , v}^{{F}_{k}}\right)}_{u , v} = \frac{{Cov}_{i} \left({b}_{i}^{{F}_{k}}\left[u\right],{b}_{i}^{{F}_{k}}\left[v\right]\right)}{\sqrt{{V}_{i} \left[{b}_{i}^{{F}_{k}}\left[u\right]\right] {V}_{i} \left[{b}_{i}^{{F}_{k}}\left[v\right]\right]}} = \\ = \frac{\frac{1}{n} {\sum }_{i = 1}^{n} \left({b}_{i}^{{F}_{k}}\left[u\right]-{E}_{i}\left[{b}_{i}^{{F}_{k}}\left[u\right]\right]\right) \left({b}_{i}^{{F}_{k}}\left[v\right]-{E}_{i}\left[{b}_{i}^{{F}_{k}}\left[v\right]\right]\right)}{\sqrt{\frac{1}{n} \left({\sum }_{i = 1}^{n} {\left({b}_{i}^{{F}_{k}}\left[u\right]-{E}_{i}\left[{b}_{i}^{{F}_{k}}\left[u\right]\right]\right)}^{2}\right) \frac{1}{n} \left({\sum }_{i = 1}^{n} {\left({b}_{i}^{{F}_{k}}\left[v\right]-{E}_{i}\left[{b}_{i}^{{F}_{k}}\left[v\right]\right]\right)}^{2}\right)}}\end{matrix}$ wherein:
- ${Σ}^{{F}_{k}} = {\left({σ}_{u , v}^{{F}_{k}}\right)}_{u , v}$ is the correlation matrix,
- ${σ}_{u , v}^{{F}_{k}}$ is the (*u, v*)-coefficient of the correlation matrix 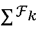 ,
- 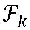 is the noise extractor used for obtaining the noise map (e.g., a Noiseprint to be applied to a luminescence channel, or a Laplace filter to be applied to a luminescence or a chrominance channel),
- *i* ranges over all blocks of the set of most homogeneous blocks of the noise map (selected at S40) obtained with the noise extractor 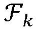 (obtained at S30),
- ${b}_{i}^{{F}_{k}}$ is an *i*-th block of the set of most homogeneous blocks of the noise map (e.g., *i*-th following a predetermined order, such as the lexicographic order),
- *u* ranges over all pixels of a block (the symbol *u* referencing a pixel of each of the blocks of the set of the most homogenous blocks),
- ${b}_{i}^{{F}_{k}} \left[u\right]$ is a value of a pixel *u* of the block ${b}_{i}^{{F}_{k}}$*,*
- ${V}_{i} \left[{b}_{i}^{{F}_{k}}\left[u\right]\right]$ is a variance of the vector ${\left({b}_{i}^{{F}_{k}}\left[u\right]\right)}_{i}$ composed by the values of the pixel u in each of the blocks of the set of most homogeneous blocks,
- ${Cov}_{i} \left({b}_{i}^{{F}_{k}}\left[u\right],{b}_{i}^{{F}_{k}}\left[v\right]\right)$ is a covariance between the vector ${\left({b}_{i}^{{F}_{k}}\left[u\right]\right)}_{i}$ composed by the values of the pixel *u* in each of the blocks of the set of most homogeneous blocks and the vector ${\left({b}_{i}^{{F}_{k}}\left[v\right]\right)}_{i}$ composed by the values of the pixel *v* in each of the blocks of the set of most homogeneous blocks,
- *n < N* is the number of blocks of the set of most homogeneous blocks selected at S30 (e.g., the cardinality of ${{min}_{i}}^{N} {V}_{u} \left[{b}_{i}^{{F}_{k}}\left[u\right]\right] ∩$ ${{min}_{i}}^{N} {E}_{u} \left.\left[{b}_{i}^{{F}_{k}}\left[u\right]\right]\right)$, and
- ${E}_{i} \left[{b}_{i}^{{F}_{k}}\left[u\right]\right]$ is an expectation of the block ${b}_{i}^{{F}_{k}}$ with respect to the variable i.

The detecting method comprises determining S50 whether the obtained image is artificially generated by providing as input the determined correlation matrices to a detector. The detector is configured to take as input the one or more correlation matrices determined in the detecting method (that are determined in the iterations of S40) and to determine whether the obtained image is artificially generated based on the one or more correlation matrices taken as input.

The detector may comprise an algorithm that processes and analyzes the data obtained as input (e.g., the one or more correlation matrices) to recognize whether the obtained image is artificially generated. It may comprise (e.g., consist of) statistical functions such as classifiers. In examples, the detector may be a composition of one or more statistical functions-at least one (e.g., each) of which may be a classifier.

The detector may comprise a reduction module designed to pre-process the input of the detector (e.g., the input of the one or more statistical functions and/or classifiers). The reduction module may determine a (e.g., strictly) lower triangular matrix of each of the one or more correlation matrices (that are determined in the iterations of S40). As the correlation matrices are symmetric and the diagonal is constant equal to 1, the reduction module may decrease the amount of data to be processed, without removing any information.

The one or more classifiers that may be comprised in the detector are now discussed. At least one (e.g., each) classifier comprised in the detector may be a discrete function *δ:* 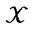 → { 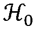 *, ...,* 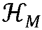 } that associates to an observation *x* ∈ 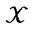 a statistical hypothesis within a set { 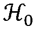 , *... ,* 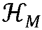 }. Each observation *x* may correspond to an image. Each observation *x* may comprise one or more correlation matrices (a correlation matrix for each noise extractor applied at S20). Alternatively, each observation *x* may comprise one or more (e.g., strictly) lower triangular matrices (e.g., a (e.g., strictly) lower triangular matrix of a correlation matrix for each correlation matrix comprised in the one or more correlation matrices). In the case *M* = 1, the classifier may be called a "binary classifier". The statistical hypotheses may be 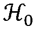 = "the inspected image comes from a real-world camera" and 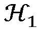 = "the inspected image comes from an artificial image generator". Alternatively, in the case *M* > 1, the classifier may be called a "multi-class classifier". The statistical hypotheses may comprise one or more statistical hypotheses corresponding to 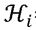 = "the inspected image comes from the artificial image generator #*i*" for some set of artificial image generators indexed by a letter *"i".*

At least one (e.g., each) of the one or more binary classifiers that may be comprised in the detector may be determined by respective one or more score functions. Thus, the detector may comprise one or more score functions. At least one (e.g., each) of the score functions may be a function *λ*: 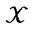 → [0,1], that assigns a real value to each observation (e.g., the observations corresponding each to a respective image). The real value may correspond to a likelihood or probability that the corresponding image comes from a real-world camera (instead of being artificially generated). The detector may comprise one or more binary classifiers each obtained from a respective score function *λ*, with the formula: $δ : X \to \left\{{H}_{0}, {H}_{1}\right\} , δ \left(x\right) = \left\{\begin{matrix}{H}_{0} if λ \left(x\right) \leq τ \\ {H}_{1} if λ \left(x\right) > τ\end{matrix}\right.$ for a predetermined threshold *τ* (e.g., with *τ =* 1/2).

Additionally or alternatively, at least one (e.g., each) of the score functions comprised in the detector may be used to determine a respective multi-class classifier. A score function *ϕ* may have *M* values, *ϕ*: 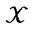 → [0,1]*^{M}, ϕ*(*x*) *=* (*ϕ₁*(*x*), *...,ϕ_{M}*(*x*))*,* with Σ*ᵢϕᵢ*(*x*) = 1 for every *x* ∈ 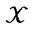 . The real value *ϕᵢ*(*x*) may correspond to a likelihood or probability that the corresponding image comes from an image generator corresponding to the index *i.* A multi-class classifier *δ* may be obtained from such a score function with multiple values with the formula: $δ \left(x\right) = arg {max}_{m} {ϕ}_{m} \left(x\right) .$

At least one (e.g., each) score function may be log-linear (e.g. a linear classifier or a logistic regression classifier). As known in the art, a log-linear function is a function whose logarithm is linear. The space of observations may be a subspace of a linear space. The linear space may be a space of which elements consist each of one or more matrices (e.g., square, lower triangular, or strictly lower triangular). The subspace may comprise all the correlation matrices, or all the (e.g., strictly) lower triangular matrices of correlation matrices.

In examples, the detector may be a pre-trained machine-learning model configured for outputting whether the image is artificially generated based on the determined correlation matrices. By pre-trained, it is meant that the coefficients and/or the parameters of the machine-learning model may have been determined during a "training process" involving applying the machine-learning model on several examples for which the classification (e.g., whether the corresponding image is artificially generated or not) is known. The detector may comprise at least one (e.g., pre-trained) binary classifier configured for taking as input the determined correlation matrices.

For example, the detector may be a pre-trained binary classifier. The pre-trained binary classifier may comprise a pre-trained score function (that may, e.g., be log-linear). Alternatively, the detector may comprise a (e.g., pre-trained) multi-class classifier, each class of the classifier corresponding to a respective image generator of a predetermined list of (artificial) image generators. That is, a list of artificial image generators may be predetermined (e.g., a list of artificial image generators that may be used for generating training examples). The multi-class classifier may determine which artificial image generators (of the predetermined list) was used for generating the image (e.g., if the image is determined to be artificially generated).

The pre-trained binary classifier and/or pre-trained score function may be obtained from respective score functions. By the mention "pre-trained", it is therefore meant that the coefficients are not directly determined by a user but are determined by a training algorithm.

The detector may be configured for applying the formula: $δ \left(x\right) : X \to \left\{{H}_{0}, {H}_{1}\right\} ; δ \left(x\right) = \left\{\begin{matrix}{H}_{0} if h \left(f\left(x\right),g\left(x\right)\right) \leq τ , \\ {H}_{1} otherwise ,\end{matrix}\right.$ wherein:
- 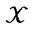 is a set (e.g., of observations) of which elements *x* ∈ 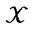 consist each of one or more correlation matrices (or one or more (e.g., strictly) lower triangular matrices of correlation matrices) and correspond each to an image,
- *f :* 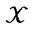 → [0,1]*^{M}*, with *f*(*x*) *=* (*f₁*(*x*), *... , f_{M}*(*x*)), is a multi-class classifier, where *fᵢ*(*x*) indicates a probability that the image corresponding to *x* is generated by a *i*-th image generator of the predetermined list of image generators, and *M* is the number of image generators of the predetermined list,
- $g = {\left\{{g}_{i}:X\to \left[0, 1\right]\right\}}_{i = 1}^{M}$ is a set of binary classifiers, each binary classifier *gᵢ*(*x*) indicating a probability that the image corresponding to *x* is generated by the *i*-th image generator of the predetermined list of image generators,
- *h:* [0,1]^{2*M*} → [0,1] is a binary classifier,
- *τ* ∈ [0,1] is a predetermined threshold,
- 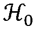 is the property that the image corresponding to *x* is not artificially generated, and
- 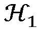 is the property that the image corresponding to *x* is artificially generated.

At least one (e.g., each) of the functions *fᵢ, gᵢ,* and *h* for i = 1, *..., M* may be log-linear. The detector may be further configured for outputting, for each given image generator of the predetermined list of image generators, a probability that the obtained image is generated by the given image generator. For example, the detector may be configured to output the value *f*(*x*) of the above-defined multi-class classifier *f*.

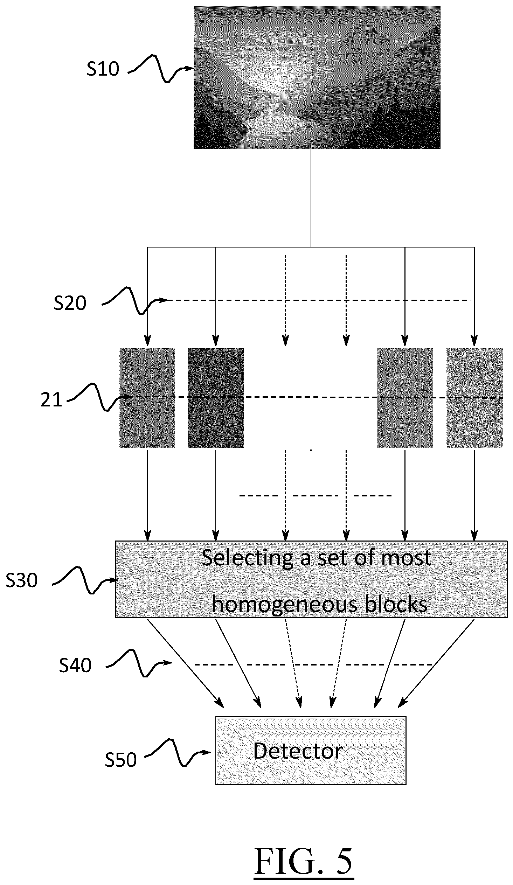

FIGs. 5, 6, and 7 illustrate flowcharts of implementations of the detecting method.

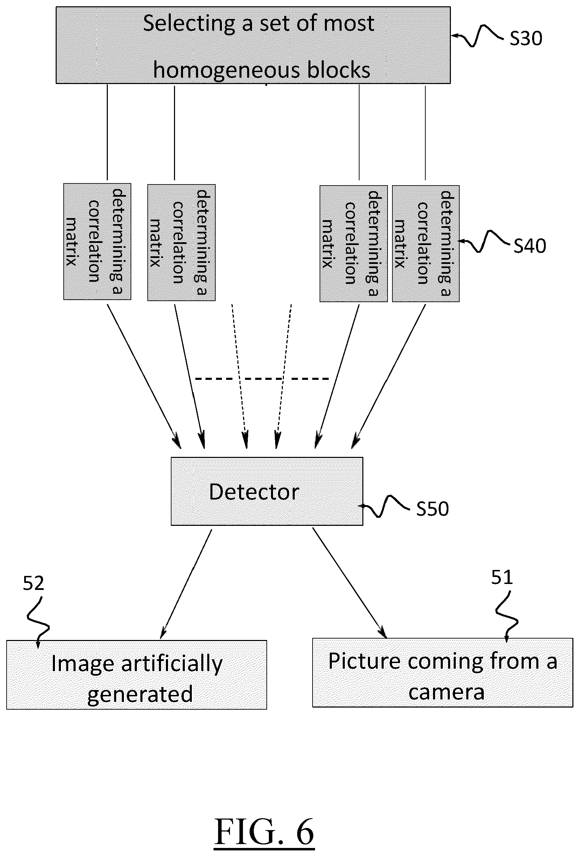

With reference to the flowchart of FIGs. 5 and 6, the detecting method comprises obtaining S10 an image. The detecting method further comprises applying S20 one or more noise extractors to the obtained image. The one or more noise maps so obtained are illustrated at 21. Then the detecting method comprises, for each of the obtained one or more noise maps, selecting S30 a set of most homogeneous blocks of the noise map. Then for each set of most homogeneous blocks (i.e., for each noise map), the detecting method comprises determining S40 a correlation matrix from the selected set of most homogeneous blocks. The detecting method further comprises determining S50 whether the obtained image is artificially generated by providing as input the determined correlation matrices to a detector. The output of the detecting method may be the "Image (obtained as input at S20) is artificially generated" 52 or "The image (obtained as input at S20) is a picture coming from a camera" 51.

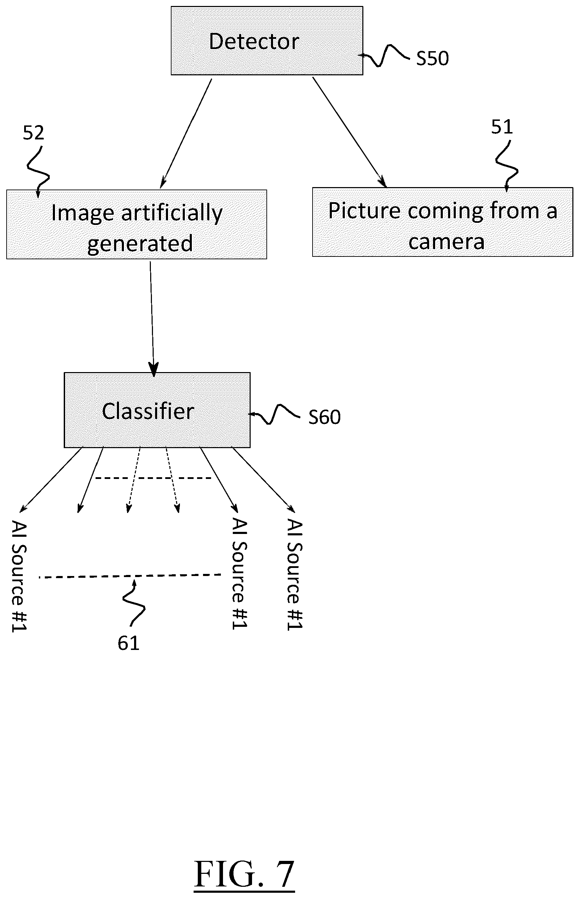

With reference to the flowchart of FIG. 7, the detecting method may further comprise, a classifier S60 (e.g., a multi-class classifier). The classifier S60 takes as input the image obtained as input at S20 only if the detector detected (at S50) that the image is artificially generated. The classifier S60 outputs a probability, for each artificial image generator of a predetermined list 61, that the image obtained at S20 has been generated with the given artificial image generator.

It is also proposed a computer-implemented method for machine-learning a model usable as detector in the detecting method. The method may be referred to as the "machine-learning method" in the present disclosure.

The machine-learning method comprises obtaining a model. The machine-learning method further comprises obtaining a dataset of training images comprising artificially generated images and real-world camera images (e.g., each image comprising a ground-truth annotation, the ground-truth annotation being either that the image is artificially generated and, in this case which artificial intelligence generator has been used, or that the image has been taken with a real-world camera). The machine-learning method further comprises obtaining a training dataset from the obtained dataset of training images. The machine-learning method further comprises training the model based on the obtained training dataset.

The model trained in the machine-learning method may be a detector usable in the detecting method (at S50). The machine-learning method and the detecting method may be combined in any way, and steps of either of the methods may be implemented in the other method. For example, the detecting method may comprise obtaining a training dataset and/or training a model, thereby obtaining a detector usable at S50.

The obtaining of the dataset of training images of the machine-learning method may comprise retrieving (e.g., from local or remote memory, e.g., from a non-volatile memory) or receiving (e.g., from a remote system, e.g., over a network) the dataset of training images. The dataset of training images may be stored on a hard drive after having been obtained.

For example, the obtaining of the dataset of training images may comprise generating at least one image (e.g., each image that is generated with an artificial image generator) with one or more artificial image generators. For example, the machine-learning method may comprise obtaining one or more artificial image generators. The obtaining of the one or more artificial image generators may comprise retrieving (e.g., from local or remote memory, e.g., from a non-volatile memory). Additionally or alternatively, the machine-learning method may comprise utilizing one or more artificial image generators on a cloud service. The obtaining of the dataset of training images may comprise obtaining (e.g., creating) one or more prompts. The obtaining of a dataset of training images may further comprise providing as input at least one (e.g., each) of the prompts to each of the one or more artificial image generators (e.g., obtained, or on a cloud service).

The obtaining of the dataset of training images of the machine-learning method may further comprise obtaining pictures made with real world camera. The obtaining may comprise, by a user, taking such pictures.

The machine-learning method further comprises obtaining a training dataset from the obtained dataset of training images. The obtaining of the training dataset of the machine-learning method may comprise applying the steps S20, S30, and S40 of the detecting method to each of the training images of the dataset of training images. Therefore, the training images may be preprocessed to match the input of the detector used at S50. Thus, the training of the model may depend on the one or more noise extractors applied at S20. That is, model trained with respect to different noise extractors may be different.

In specifics, the obtaining of the training dataset of the machine-learning method may comprise, for each training image, applying one or more noise extractors (e.g., the one or more noise extractors of S20) to the training image, thereby obtaining one or more noise maps of the training image. The obtaining of the training dataset may further comprise, for each of the obtained noise map, selecting a set of most homogeneous blocks of the noise map (e.g., with most homogeneous being defined as in S30), each block comprising respective adjacent pixels of the noise map. The obtaining of the training dataset may further comprise, for each obtained noise map, determining a correlation matrix from the selected set of most homogeneous blocks, the correlation matrix representing a correlation between pairs of pixels of the selected set of most homogeneous blocks (e.g., with the correlation matrices being defined as in S40).

The machine-learning method comprises training a model based on the training dataset. The training (or equivalently machine-learning) of the model comprises providing the samples of the training dataset as input to the model. Each of the samples is processed through the model by multiplying values of the sample (e.g., coefficients of a respective correlation matrix) with weights, applying activation functions, and combining results across layers (e.g., across the classifiers and/or score-functions that may be comprised in the model/detector). The training may then comprise comparing the output of the model against the ground truth (that is, whether the image was artificially generated or not). The comparison may comprise outputting an error (e.g., being either wrong or correct). The error may then be used to backpropagate through the model, leading to adjustments in the weights to minimize the error. Various optimization solvers, each having their own set of hyperparameters, may be employed during the training process to efficiently converge toward an optimal set of parameters. Hence, as is known per se from the field of machine-learning, the training of the model comprises tuning the weights, biases, and other parameters of the model so that the processing of an input accurately predicts whether the image is artificially generated.

Implementations and results of implementations of the detecting method and of the machine-learning method are herein described.

Determining a noise map of an image is a non-trivial operation. For example, some of the methods known in the art are based on information that are difficult to obtain in a realistic scenario. Moreover, the variance of the noise depends on the average brightness of the region of the image.

In the case of the Laplacian filters, these filters may both be used for extracting noise from a zone without too much variation and determining the contour of an object in the image. Therefore, in order to extract noise information from an image, it may be required to select regions (e.g., blocks) of the image wherein the filters are most capable of estimating the distribution of the noise.

Implementations may comprise computing the covariance of the noise for every pair of pixels of the image, as this would give the maximal information. However, for an image of size 512 × 512 (that is, 2⁹ × 2⁹), the covariance matrix would have 2¹⁸ × 2¹⁸ coefficients, that is about 6.9 × 10¹⁰ coefficients. Therefore, the computations required to compute such a covariance matrix would require too much time and computational power.

The detecting method solves both the problem of the size of the correlation matrix and of the fact that the noise filter may detect artifacts that is not noise, by cutting the image into blocks (e.g., non-overlapping blocks). Implementations of the detecting method may comprise cutting the image into blocks of size 8 × 8 (this size has the advantage of synchronizing with the size of compression of JPEG). Implementations of the detecting method may comprise selecting S20 for the computation of the correlation matrix, the blocks that have both a low variance and mean of the absolute value. That is, in implementations of the detecting method, the set of most homogenous blocks may be: ${B}_{s}^{{F}_{k}} = \left\{{b}_{i}^{{F}_{k}}:{b}_{i}^{{F}_{k}}∈{{min}_{i}}^{N}{V}_{u}\left[{b}_{i}^{{F}_{k}}\left[u\right]\right]∩{{min}_{i}}^{N}{E}_{u}\left[\left|{b}_{i}^{{F}_{k}}\left[u\right]\right|\right]\right\}$ as explained above.

After having selected the best blocks, the implementations may comprise determining S40 the correlations matrices as explained above with the formula: ${Σ}^{{F}_{k}} = {\left({σ}_{u , v}^{{F}_{v}}\right)}_{u , v} = \frac{{Cov}_{i} \left({b}_{i}^{{F}_{k}}\left[u\right],{b}_{i}^{{F}_{k}}\left[v\right]\right)}{\sqrt{{V}_{i} \left[{b}_{i}^{{F}_{k}}\left[u\right]\right] {V}_{i} \left[{b}_{i}^{{F}_{k}}\left[v\right]\right]}}$

Implementations comprise extracting an imprint from the image obtained at S20. The imprint may comprise a strictly lower triangular matrix for each of the noise extractors. The strictly lower triangular matrix may be consist of the strictly lower triangular coefficients of a correlation matrix determined at S40 relative to the respective noise extractor. As each correlation matrix is symmetric and the values on the diagonal are 1, there is no loss of information in taking its strictly lower triangular form. That is, the imprinting of an image may be: ${C}_{F} = \left\{{\left(tri\left({Σ}^{{F}_{k}}\right)\right)}_{{F}_{k}}\right\}$ where tri(·) denotes the strictly lower triangular form of a matrix and 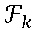 varies along all the noise extractor applied at S20.

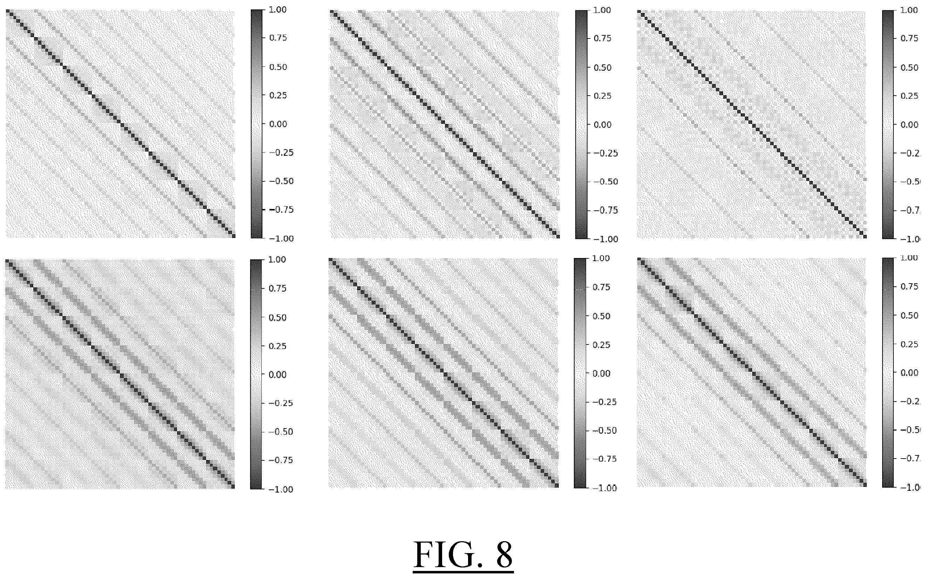

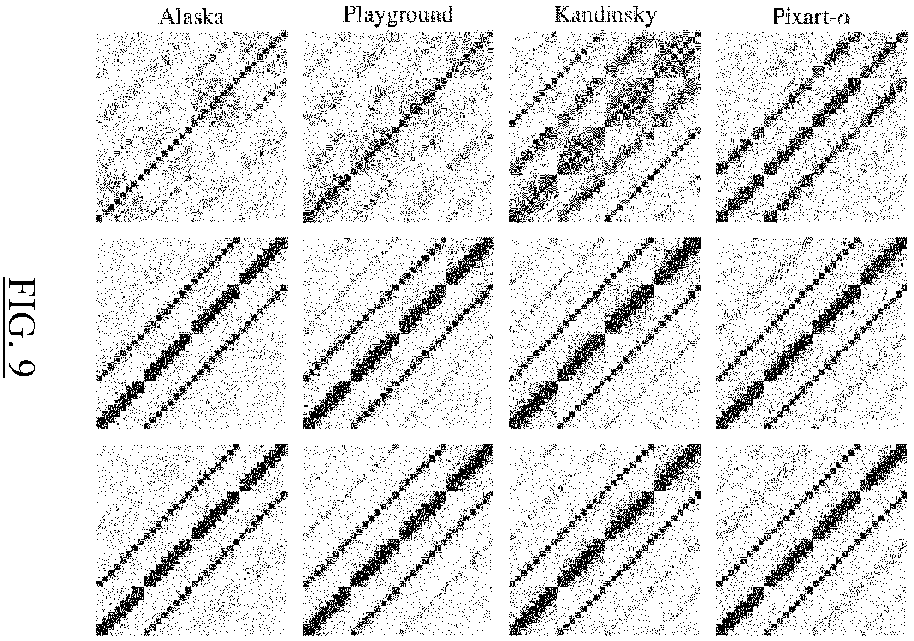

FIGs. 8 and 9 illustrate examples of correlation matrices of blocks of size 8 × 8. In FIG. 8, the first row corresponds to images obtained with a real camera and the second row corresponds to artificially generated images. In FIG. 9, the first column corresponds to correlation matrices obtained with a Laplacian filter applied to the Y channel, the second column corresponds to correlation matrices obtained with a Laplacian filter applied to the Cb channel, and the third column corresponds to correlation matrices obtained with a Laplacian filter applied to the Cr channel. The rows correspond to different artificial image generators. As may be seen in both FIGs. 8 and 9, the correlation matrices depend on the image generators and are different from the images obtained with real word cameras.

The detector of the implementations may comprise a statistical test. A statistical test is a discrete function *δ:* 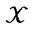 → { 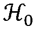 , ... , 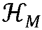 } that associate to an observation *x* ∈ 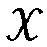 one of the statistical hypotheses { 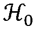 , *... ,* 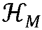 }. The hypothesis of the implementations may be 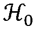 = "the inspected image comes from a real-world camera" and 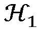 = "the inspected image comes from an artificial image generator". The observation space 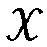 in the implementations may be the space imprinting 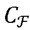 , one imprinting for each image. So, each element of the observation space is associated with an image.

A statistical test having two hypotheses, that is, wherein *M* = 1, may be called a binary classifier. The detector of the implementations may comprise a binary classifier. The binary classifier *δ* as above may be obtained using a score function *λ*: 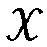 → [0,1], that assigns a real vale to each observation (corresponding to an image), the real value corresponding to a likelihood or probability that the image comes from a real-world camera or is artificially generated. The binary classifier may be obtained from the score function as follows: $δ : X \to \left\{{H}_{0}, {H}_{1}\right\} , δ \left(x\right) = \left\{\begin{matrix}{H}_{0} if λ \left(x\right) \leq τ , \\ {H}_{1} if λ \left(x\right) > τ\end{matrix}\right.$ The threshold *τ* may be any real number between 0 and 1, e.g., 1/2.

A statistical test having multiple hypothesis, for *M* > 1, may be called a multi-class classifier. Thus, the detector of the implementations may comprise a multi-class classifier. The multi-class classifier *δ* may be obtained using a score function with *M* values *ϕ:* 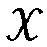 → [0,1]*^{M}*, *ϕ*(*x*) *=* (*ϕ₁*(*x*), *... , ϕ_{M}*(*x*)), with *Σᵢϕᵢ*(*x*) = 1 for every *x* ∈ 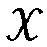 *.* In implementations, the class associated to each input *x* may be associated with the highest score, that is, $δ \left(x\right) = arg {max}_{m} {ϕ}_{m} \left(x\right)$*.*

Implementations may be based on a "1-step" paradigm or a "3-step" paradigm. Specifically, the detector of the implementations may be a (1-step)-detector or a (3-step)-detector.

The (1-step)-detector is a binary classifier that may be obtained with a score function. The score function may be log-linear.

The (3-step)-detector is a composition of binary classifiers and a multi-class classifier. At least one (e.g., each) of the binary classifiers and the multi-class classifier may be based on respective score functions. At least one (e.g., each) of the score functions may be log-linear. The (3-step)-detector may be based on a multi-class classifier *f*: 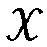 → [0,1]*^{M}*, with *f*(*x*) *=* (*f₁*(*x*), *... ,f_{M}*(*x*)), which classifies among the M considered artificial image generators. The (3-step)-detector may further be based on a set of binary classifiers $g = {\left\{{g}_{i}:X\to \left[0, 1\right]\right\}}_{i = 1}^{M}$, with *g*(*x*) = (*g₁*(*x*), *..., g_{M}*(*x*)). The (3-step)-detector may further be based on a binary classifier *h:* [0,1]^{2*M*} → [0,1] taking as input the output of both *f*(*x*) and *g*(*x*)*,* and giving as output the final prediction *h*(*f*(*x*), *g*(*x*)). Thus, the (3-step)-detector may be $δ \left(x\right) : X \to \left\{{H}_{0}, {H}_{1}\right\} ; δ \left(x\right) = \left\{\begin{matrix}{H}_{0} if h \left(f\left(x\right),g\left(x\right)\right) \leq τ \\ {H}_{1} otherwise\end{matrix}\right.$ The threshold *τ* may be any real number between 0 and 1, e.g., 1/2.

The implementations may comprise training the detector (e.g., the (1-step)-detector or the (3-step)-detector). Thus, the implementations may comprise obtaining a dataset of training images, comprising both artificially generated images and images coming from real-world cameras. The implementations may comprise obtaining artificially generated images with a multitude of image generators. Implementations may comprise generating a plurality of images (e.g., approximately 10000 images) with "text-to-image" generators. Implementations may comprise generating the plurality of images using at least one (e.g., each) of the following image generators:
- Animagine XL-3.1, available at
   https://huggingface.co/cagliostrolab/animagine-xl-3.1,
- DeepFloyd XL, available at
   https://huggingface.co/DeepFloyd/IF-I-XL-v1.0,
- DreamLike-Photoreal 2.0, available at
   https://huggingface.co/dreamlike-art/dreamlike-photoreal-2.0,
- Kandinsky v2.1, available at
   https://huggingface.co/kandinsky-community/kandinsky-2-2-decoder,
- Pixart-α, disclosed in Junsong Chen, Jincheng Yu, Chongjian Ge, Lewei Yao, Enze Xie, Yue Wu, Zhongdao Wang, James Kwok, Ping Luo, Huchuan Lu, and Zhenguo Li, *"Pixart-α: Fast training of diffusion transformer for photorealistic text-to-image synthesis",*
- Playground v2, disclosed in Daiqing Li, Aleks Kamko, Ehsan Akhgari, Ali Sabet, Linmiao Xu, and Suhail Doshi, *"Playground v2.5: Three insights towards enhancing aesthetic quality in text-to-image generation",*
- Shifted diffusion, disclosed in Yufan Zhou, Bingchen Liu, Yizhe Zhu, Xiao Yang, Changyou Chen, and Jinhui Xu, *"Shifted diffusion for text-to-image generation",*
- Stable-diffusion v1.5 and Stable-diffusion v2.1, disclosed in Robin Rombach, Andreas Blattmann, Dominik Lorenz, Patrick Esser, and Björn Ommer, "High-resolution image synthesis with latent diffusion models", in Proceedings of the IEEE/CVF Conference on Computer Vision and Pattern Recognition (CVPR), pages 10684-10695, June 2022,
- Stable-diffusion XL, disclosed in Dustin Podell, Zion English, Kyle Lacey, Andreas Blattmann, Tim Dockhorn, Jonas Müller, Joe Penna, and Robin Rombach, *"Sdxl: Improving latent diffusion models for high-resolution image synthesis",*
- LCM-Dreamshaper v7, available at https://civitai.com/models/4384?modelVersionld=109123,
- Latent Diffusion Model, disclosed in Andreas Blattmann, Robin Rombach, Kaan Oktay, Jonas Müller, and Björn Ommer, "Semi-parametric neural image synthesis*",*
- gigaGAN, disclosed in Minguk Kang, Jun-Yan Zhu, Richard Zhang, Jaesik Park, Eli Shechtman, Sylvain Paris, and Taesung Park, "Scaling up gans for text-to-image synthesis", in Proceedings of the IEEE Conference on Computer Vision and Pattern Recognition (CVPR), 2023,
- StyleGAN 2, disclosed in Tero Karras, Miika Aittala, Janne Hellsten, Samuli Laine, Jaakko Lehtinen, and Timo Aila, "Training generative adversarial networks with limited data", 2020, and/or
- StyleGAN 3, disclosed in Tero Karras, Miika Aittala, Samuli Laine, Erik Härkönen, Janne Hellsten, Jaakko Lehtinen, and Timo Aila, "Alias-free generative adversarial networks", In Proc. NeurIPS, 2021.

The implementations may comprise training the detector (e.g., the (1-step)-detector or the (3-step)-detector) based on different sets of noise extractors, such as
- Noiseprint on a Y-channel, and/or
- Laplacian filter on a Y-channel, a Cb-channel, and/or a Cb-channel.

Some of the implementations were tested. The detector of the tested implementations was either a (1-step)-detector or a (3-step)-detector. The detector was trained, using a dataset of approximately 10000 images, generated with the above-mentioned image generators. The results of such implementations and tests are reported herein below.

The tests were effectuated on images generated with the above-mentioned image generators (e.g., not the same images used in the training phase of the detector). Such tests will be referred to as ID-testing ("In Distribution"-testing). The tests were also effectuated on images generated with the image generators not used for the training phase. Such tests will be referred as OOD-testing ("Out Of Distribution"-testing). The image generators used for OOD-testing comprised:
- Copilot, available at https://copilot.microsoft.com/,
- Ideogram, available at https://ideogram.ai/,
- Leonardo, available at https://leonardo.ai/,
- Lexica, available at https://lexica.art/,
- LongCaptions, available at https://www.captions.ai/,
- MidJourney v6, available at https://www.midjourney-v6.com/,
- α-genmo, available at https://www.genmo.ai/,
- BingCreator, available at
   https://www.bing.com/images/create?FORM=GENILP,
- DeepDream, available at https://deepdreamgenerator.com/,
- Firefly, available at https://www.adobe.com/fr/products/firefly.html,
- Google Gemini, available at https://gemini.google.com/,
- Meta Al, available at https://www.meta.ai/, and/or
- Runway, available at https://runwayml.com/.

The results, in terms of error rate and AUC (i.e., area under the ROC curve) are given in the table below.

| Test | method | Npr | Y | Cb | Cr | Npr-Y | Y-Cb | Y-Cr | Cb-Cr | Y-Cb-Cr |
|---|---|---|---|---|---|---|---|---|---|---|
| ID | 1-step | 12.0 / .948 | 5.38 / .986 | 5.14 / .988 | 4.36 / .988 | 3.09 / .994 | 1.84 / .996 | 1.55 / .997 | 2.68 / .995 | 1.81 / .997 |
| ID | 3-step | 8.65 / .968 | 1.82/ .997 | 2.36 / .993 | 2.07 / .993 | 0.86 / .998 | 0.81 / .997 | 0.68 / .998 | 1.14 / .995 | 0.62 / .997 |
| OOD | 1-step | 21.0 / .858 | 12.4 / .922 | 7.27 / .981 | 7.54 / .983 | 9.39 / .963 | 3.34 / .995 | 4.25 / .993 | 10.3 / .97 | 2.71 / .996 |
| OOD | 3-step | 17.8 / .899 | 12.5 / .945 | 1.22/ .999 | 1.58 / .997 | 8.72 / .972 | 1.76 / .997 | 1.76 / .997 | 1.63 / .998 | 1.49 / .997 |

The rows of the table corresponding to Test "ID" are the ID-testing. The rows of the table corresponding to Test "OOD" are the OOD-testing.

The rows of the table corresponding to method "1-step" are the tests done with a (1-step)-detector. The rows of the table corresponding to method "3-step" are the tests done with a (3-step)-detector.

The columns comprising "Npr" correspond to tests wherein the one or more noise extractors of S20 comprised a Noiseprint (on the Y-channel). The columns comprising "Y" correspond to tests wherein the one or more noise extractors of S20 comprised a Laplacian filter on the Y-channel. The columns comprising "Cb" correspond to tests wherein the one or more noise extractors of S20 comprised a Laplacian filter on the Cb-channel. The columns comprising "Cr" correspond to tests wherein the one or more noise extractors of S20 comprised a Laplacian filter on the Cr-channel. The different noise extractor used for the testing are separated with the symbol "-". For example, the column "Y-Cb-Cr" corresponds to tests using three noise extractors, specifically three Laplacian filters, one on the Y-channel, one on the Cb-channel, and one on the Cr-channel.

The entries of the table comprising two numerical values report the results of the test. The first value corresponds to *P_{E}* the probability of minimal error under the hypothesis of balanced classes. That is, ${P}_{E} = {min}_{τ ∈ ℝ} \frac{1}{2} ℙ \left(λ\left(x\right)>τ\left|{H}_{0}\right.\right) + ℙ \left(λ\left(x\right)\leq τ\left|{H}_{1}\right.\right)$

The second value is *AUC,* the area under the curve.

The table shows that the methods of the present disclosure are effective for detecting artificially generated images generated by a large variety of image generators, both with image generators used for the training and image generators not used for the training. The table shows that the (3-step)-detector is more accurate than the (1-step)-detector. The table also shows that the Laplacian filters applied to the Y-Cb-Cr channels provide exceptional results both for the ID-testing (under 1% *P_{E}* errors) and the OOD-testing (under 1.5% *P_{E}* errors).

Similar tests were performed using the following prior art methods:
- StyleGAN-d (Style-d), as disclosed in Diego Gragnaniello, Davide Cozzolino, Francesco Marra, Giovanni Poggi, and Luisa Verdoliva, "Are GAN generated images easy to detect? a critical analysis of the state-of-the-art", 2021*,*
- DM-d, as disclosed in Riccardo Corvi, Davide Cozzolino, Giada Zingarini, Giovanni Poggi, Koki Nagano, and Luisa Verdoliva, "On the detection of synthetic images generated by diffusion models", in IEEE ICASSP, 2023,
- ProGAN-d (Pro-d), as disclosed in Sheng-Yu Wang, Oliver Wang, Richard Zhang, Andrew Owens, and Alexei A. Efros, "CNN-generated images are surprisingly easy to spot... for now", 2020*,*
- CLIP-d (CLIP), as disclosed in Davide Cozzolino, Giovanni Poggi, Riccardo Corvi, Matthias Niesner, and Luisa Verdoliva, "Raising the bar of AI-generated image detection with clip", 2024, and
- NoiseSniffer (Sniff.), as disclosed in Marina Gardella, Pablo Musé, Jean-Michel Morel, and Miguel Colom, "Noisesniffer: a fully automatic image forgery detector based on noise analysis", in 2021 IEEE IWBF, 2021.

The results on the prior art methods are given in the table below.

| Test | Style-d | DM-d | Pro-d | CLIP | Sniff. |
|---|---|---|---|---|---|
| ID-DM | 42.8 / .600 | 3.07 / .996 | 48.4 / .479 | 22.0 / .858 | -/- |
| ID-GAN | 27.9 / .679 | 44.4 / .554 | 16.1 / .925 | 37.8 / .665 | -/- |
| ID-avg | 39.6 / .621 | 16.2 / .873 | 41.7 / .598 | 24.5 / .828 | 37.3 / .648 |
| OOD | 39.6 / .621 | 8.92 / .967 | 48.4 / .421 | 39.5 / .639 | 42.6 / .562 |

As in the previous table, the entries of the table comprising two numerical values report the results of the test. The first value corresponds to *P_{E}* the probability of minimal error under the hypothesis of balanced classes, and the second value is *AUC,* the area under the curve. The results for the ID-test images are split between ID diffusion images and ID GAN images, highlighting the inconsistency of training on only one type of image generator and testing on another.

The comparison shows the effectiveness of the methods of the present disclosure compared to prior art.

The implementations were also tested on compressed images, in the JPEG format. The results are based on the (1-step)-detector based on the noise maps generated with the Laplacian filters applied to the Y-Cb-Cr channels. The results are compared to another method, the CLIP method, which is supposed to be one of the best prior art methods for JPEG images.

| Test | method | QF 90 | QF 80 | QF 70 | QF 60 |
|---|---|---|---|---|---|
| ID | 1-step | 5.91 / .985 | 6.64 / .979 | 7.79 / .971 | 8.95 / .964 |
| ID | CLIP | 22.5 / .855 | 21.8 / .859 | 20.9 / .872 | 21.5 / .868 |
| OOD | 1-step | 6.43 / .981 | 7.38 / .977 | 11.1 / .959 | 8.54 / .962 |
| OOD | CLIP | 37.9 / .665 | 34.4 / .710 | 31.8 / .743 | 30.7 / .754 |

As can be seen, even at a high compression rate of "QF 60", the errors associated with the results of the tests made with an implementation comprising a (1-step)-detector are lower than 10% both in the ID and OOD case. The errors associated with results of similar tests made with the CLIP method (prior art) are always higher than 20% in IDD and 30% in OOD case. The errors associated with results of similar tests made with an implementation using a (3-step)-detector are even lower than the one for the (1-step)-detector.

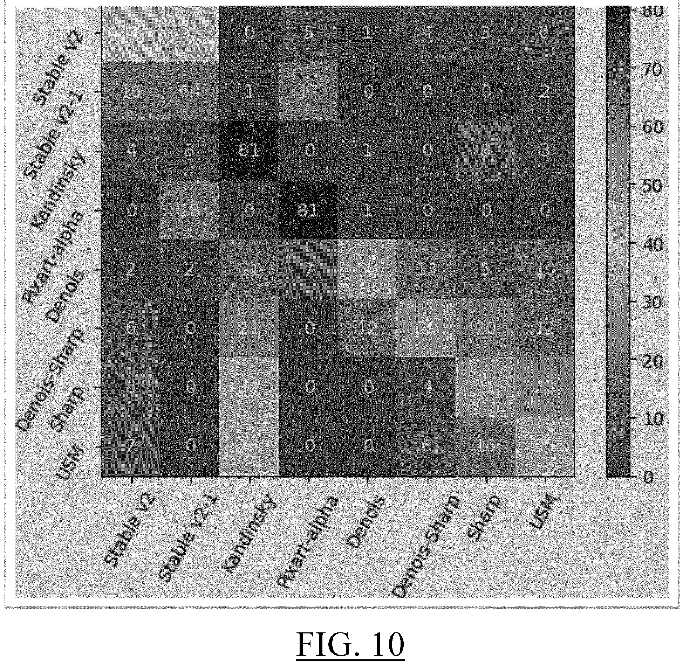

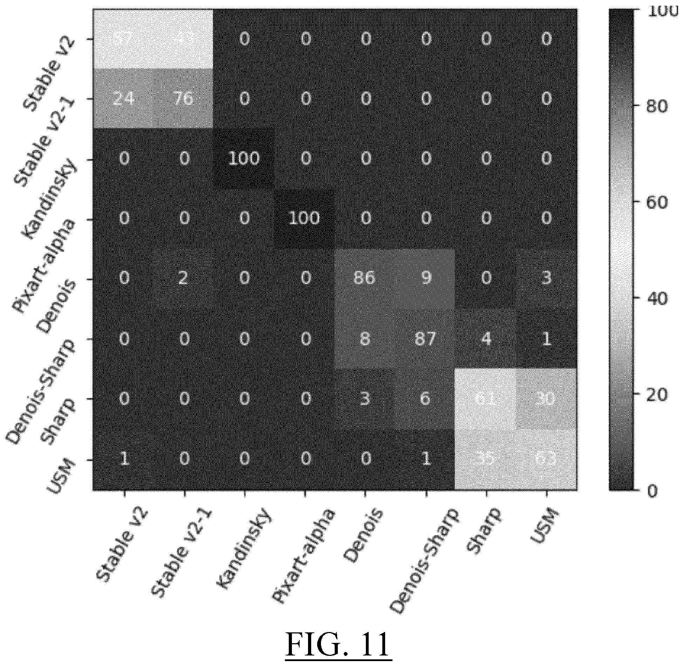

FIGs. 10 and 11 illustrate results of multi-class classification functions that may be comprised in the detector.

The methods of the present disclosure are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or predefined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

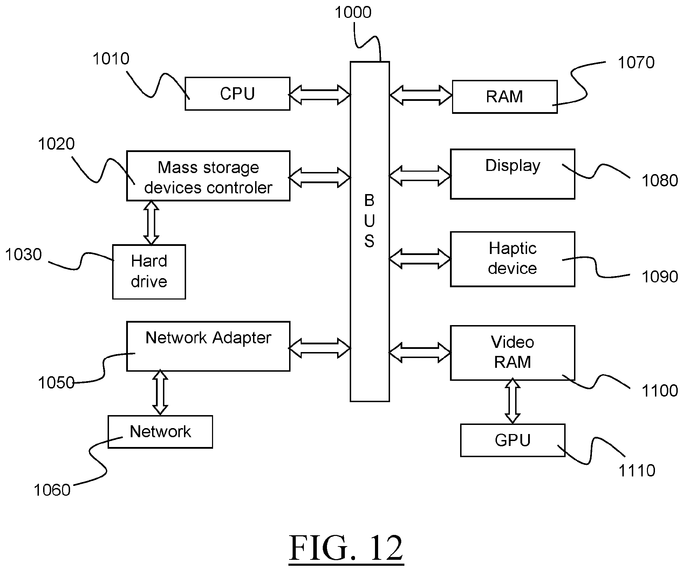

FIG. 12 shows an example of the system, wherein the system is a client computer system, *e.g.,* a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A computer-implemented method for detecting an artificially generated image, the method comprising:
- obtaining (S10) an image;
- applying (S20) one or more noise extractors to the obtained image, thereby obtaining one or more noise maps of the obtained image;
- for each obtained noise map:
∘ selecting (S30) a set of most homogeneous blocks of the noise map, each block comprising respective adjacent pixels of the noise map;
∘ determining (S40) a correlation matrix from the selected set of most homogeneous blocks, the correlation matrix representing a correlation between pairs of pixels of the selected set of most homogeneous blocks;
- determining (S50) whether the obtained image is artificially generated by providing as input the determined correlation matrices to a detector.

2. The detecting method of claim 1, wherein the set of most homogeneous blocks are selected by minimizing a variance and/or a mean absolute value.

3. The detecting method of claim 2, wherein the selecting of the set of most homogeneous blocks is performed using the formula: ${B}_{s}^{{F}_{k}} = \left\{{b}_{i}^{{F}_{k}}:{b}_{i}^{{F}_{k}}∈{{min}^{N}}_{i}{V}_{u}\left[{b}_{i}^{{F}_{k}}\left[u\right]\right]∩{{min}^{N}}_{i}{E}_{u}\left[\left|{b}_{i}^{{F}_{k}}\left[u\right]\right|\right]\right\}$ wherein:
- ${B}_{s}^{{F}_{k}}$ is the selected set of most homogeneous blocks;
- 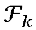 is the noise extractor used for obtaining the noise map;
- *i* ranges over a set of blocks of the noise map;
- ${b}_{i}^{{F}_{k}}$ is an *i*-th block of the noise map;
- *u* ranges over all pixels of a block;
- ${b}_{i}^{{F}_{k}} \left[u\right]$ is a value of a pixel *u* of the block ${b}_{i}^{{F}_{k}}$*;*
- ${V}_{u} \left[{b}_{i}^{{F}_{k}}\left[u\right]\right]$ is a variance of the values of the pixels of the block ${b}_{i}^{{F}_{k}}$ with respect to the variable *u;*
- ${E}_{u} \left[\left|{b}_{i}^{{F}_{k}}\left[u\right]\right|\right]$ is an expected absolute value of the values of the pixels of the block ${b}_{i}^{{F}_{k}}$ with respect to the variable *u;*
- *N* is a predetermined maximum number of blocks;
- ${{min}_{i}}^{N} {V}_{u} \left[{b}_{i}^{{F}_{k}}\left[u\right]\right]$ is a set of *N* blocks ${b}_{i}^{{F}_{k}}$ whose variance ${V}_{u} \left[{b}_{i}^{{F}_{k}}\left[u\right]\right]$ is the lowest among all blocks; and
- ${{min}_{i}}^{N} {E}_{u} \left[\left|{b}_{i}^{{F}_{k}}\left[u\right]\right|\right]$ is a set of *N* blocks ${b}_{i}^{{F}_{k}}$ whose expected absolute value ${E}_{u} \left[\left|{b}_{i}^{{F}_{k}}\left[u\right]\right|\right]$ is the lowest among all blocks.

4. The detecting method of any one of claim 1 to 3, wherein the determining of the correlation matrix is performed using the formula: ${\sum }^{{F}_{k}} = {\left({σ}_{u , v}^{{F}_{k}}\right)}_{u , v} = \frac{{Cov}_{i} \left({b}_{i}^{{F}_{k}}\left[u\right],{b}_{i}^{{F}_{k}}\left[v\right]\right)}{\sqrt{{V}_{i} \left[{b}_{i}^{{F}_{k}}\left[u\right]\right] {V}_{i} \left[{b}_{i}^{{F}_{k}}\left[v\right]\right]}}$ wherein:
- ${Σ}^{{F}_{k}} = {\left({σ}_{u , v}^{{F}_{k}}\right)}_{u , v}$ is the correlation matrix;
- 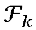 is the noise extractor used for obtaining the noise map;
- *i* ranges over all blocks of the set of most homogeneous blocks of the noise map;
- ${b}_{i}^{{F}_{k}}$ is an i-th block of the set of most homogeneous blocks of the noise map;
- *u* ranges over all pixels of a block;
- ${b}_{i}^{{F}_{k}} \left[u\right]$ is a value of a pixel *u* of the block ${b}_{i}^{{F}_{k}}$;
- ${V}_{i} \left[{b}_{i}^{{F}_{k}}\left[u\right]\right]$ is a variance of the vector ${\left({b}_{i}^{{F}_{k}}\left[u\right]\right)}_{i}$ composed by the values of the pixel *u* in each of the blocks of the set of most homogeneous blocks; and
- ${Cov}_{i} \left({b}_{i}^{{F}_{k}}\left[u\right],{b}_{i}^{{F}_{k}}\left[v\right]\right)$ is a covariance between the vector ${\left({b}_{i}^{{F}_{k}}\left[u\right]\right)}_{i}$ composed by the values of the pixel *u* in each of the blocks of the set of most homogeneous blocks and the vector ${\left({b}_{i}^{{F}_{k}}\left[v\right]\right)}_{i}$ composed by the values of the pixel *v* in each of the blocks of the set of most homogeneous blocks.

5. The detecting method of any one of claim 1 to 4, wherein the one or more noise extractors comprise a Noiseprint extractor and/or one or more Laplacian filters, the one or more Laplacian filters being optionally each for a respective color channel of the obtained image.

6. The detecting method of any one of claims 1 to 5, wherein the detector is a pre-trained machine-learning model configured for outputting whether the image is artificially generated based on the determined correlation matrices.

7. The detecting method of claim 6, wherein the detector comprises at least one binary classifier configured for taking as input the determined correlation matrices.

8. The detecting method of claim 6 or 7, wherein the detector comprises a multi-class classifier, each class of the classifier corresponding to a respective image generator of a predetermined list of image generators.

9. The detecting method of claim 8, wherein the detector is configured for applying the formula: $δ \left(x\right) : X \to \left\{{H}_{0}, {H}_{1}\right\} ; δ \left(x\right) = \left\{\begin{matrix}{H}_{0} if h \left(f\left(x\right),g\left(x\right)\right) \leq τ , \\ {H}_{1} otherwise ,\end{matrix}\right.$ wherein:
- 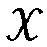 is a set of which elements *x* ∈ 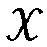 each consisting of one or more correlation matrices and each corresponding to an image;
- *f:* 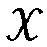 → [0,1]*^{M}*, with *f*(*x*) = (*f₁*(*x*), *... , f_{M}*(*x*))*,* is a multi-class classifier, where *fᵢ*(*x*) indicates a probability that the image corresponding to *x* is generated by a *i*-th image generator of the predetermined list of image generators, and *M* is the number of image generators of the predetermined list;
- $g = {\left\{{g}_{i}:X\to \left[0, 1\right]\right\}}_{i = 1}^{M}$ is a set of binary classifiers, each binary classifier *gᵢ*(*x*) indicating a probability that the image corresponding to *x* is generated by the *i*-th image generator of the predetermined list of image generators;
- *h:* [0,1]^{2*M*} → [0,1] is a binary classifier;
- *τ* ∈ [0,1] is a predetermined threshold;
- 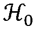 is the property that the image corresponding to *x* is not artificially generated; and
- 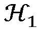 is the property that the image corresponding to *x* is artificially generated.

10. The detecting method of any one of claims 7 to 9, wherein the detector is further configured for outputting, for each given image generator of the predetermined list of image generators, a probability that the obtained image is generated by the given image generator.

11. A computer-implemented method for machine-learning a model usable as detector in a method for detecting an artificially generated image according to any one of claims 6 to 10, the machine-learning method comprising:
- obtaining a model;
- obtaining a dataset of training images comprising artificially generated images and real-world camera images;
- obtaining a training dataset from the obtained dataset of training images; and
- training the model based on the obtained training dataset.

12. The machine-learning method of claim 11, wherein the obtaining of the training dataset comprises, for each training image:
- applying one or more noise extractors to the training image, thereby obtaining one or more noise maps of the training image;
- for each obtained noise map:
∘ selecting a set of most homogeneous blocks of the noise map, each block comprising respective adjacent pixels of the noise map;
∘ determining a correlation matrix from the selected set of most homogeneous blocks, the correlation matrix representing a correlation between pairs of pixels of the selected set of most homogeneous blocks.

13. A computer-program comprising instructions which, when the program is executed by a computer, cause the computer to carry out the detecting method of any one of claims 1 to 10 and/or the machine-learning method of claim 11 or 12.

14. A computer-readable storage medium having recorded thereon the computer program of claim 13.

15. A system comprising a processor coupled to a memory, the memory having recorded thereon the computer program of claim 13.
